# EUROPÄISCHE PATENTSCHRIFT

(11) **EP 3 642 758 B1**
(45) Veröffentlichungstag und Bekanntmachung des Hinweises auf die Patenterteilung: **19.08.2020**
(21) Anmeldenummer: 18778813.8
(22) Anmeldetag: 06.09.2018
(51) Int. Cl.: G06K 9/00, G06K 9/62

(54) **VERFAHREN ZUM AUSWERTEN EINES OPTISCHEN ERSCHEINUNGSBILDES IN EINER FAHRZEUGUMGEBUNG UND FAHRZEUG**
METHOD FOR EVALUATING AN OPTICAL APPEARANCE IN THE SURROUNDINGS OF A VEHICLE, AND VEHICLE
PROCÉDÉ D'ÉVALUATION D'UN ASPECT VISUEL DANS UN ENVIRONNEMENT DU VÉHICULE ET VÉHICULE

(30) Priorität: 07.09.2017 DE 102017215718
(43) Veröffentlichungstag der Anmeldung: 29.04.2020
(73) Patentinhaber: Audi AG, 85045 Ingolstadt (DE)
(72) Erfinder: FRIEDMANN, Felix, 85386 Eching (DE); VOROBIOV, Oleksandr, 72458 Albstadt (DE)
(86) Internationale Anmeldenummer: PCT/EP2018/074030
(87) Internationale Veröffentlichungsnummer: WO 2019/048554

(56) Entgegenhaltungen:
- EP-A1- 1 780 675
- DE-A1- 19 926 559
- JP-A- 2004 310 282
- YINGPING HUANG ET AL: "Stereovision-Based Object Segmentation for Automotive Applications", EURASIP JOURNAL ON ADVANCES IN SIGNAL PROCESSING, Bd. 2005, Nr. 14, 25. August 2005 (2005-08-25), Seiten 2322-2329, XP055095478, ISSN: 1687-6172, DOI: 10.1155/ASP.2005.2322

## Beschreibung

Die vorliegende Erfindung betrifft den Bereich der Automobiltechnik, insbesondere betrifft die vorliegende Erfindung ein Verfahren zum Auswerten eines optischen Erscheinungsbildes in einer Fahrzeugumgebung und ein Fahrzeug.

DE 10 2015 007 145 A1 beschreibt ein Verfahren zur automatischen Fahrroutenbewertung, bei dem ein optisches Erscheinungsbild einer Fahrstrecke hinsichtlich eines subjektiven emotionalen Attraktivitätskriteriums ausgewertet wird. Aus gesammelten Videoaufnahmen werden durch maschinelles Lernen, insbesondere mittels tiefer neuronaler Netze, automatisch für jedes Bild im Videosignal Werte für Attraktivitätskriterien, wie landschaftliche Schönheit, architektonische Schönheit, Abgeschiedenheit, extrahiert.

Aus der US 6141433 A sind ein System und ein Verfahren zur Extraktion von Bildinformationen von einem Videoframe für Regionen des Videoframes bekannt, die voraussichtlich Objekte von Interesse in einer Szene sind.

Aus der US 2013/0083968 A1 ist eine Fahrzeugperipherieüberwachungsvorrichtung bekannt, die ein Objekt, das außerhalb eines Fahrzeugs vorhanden ist, unter Verwendung einer fahrzeuginternen Kamera detektiert.

Aus der US 2009/0169052 A1 ist ein Objektdetektionsapparat zum Detektieren eines peripheren Objekts basierend auf einem aufgenommenen Bild bekannt.

Aus der US 2014/0010408 A1 ist ein Detektor für linsenangebrachte Materie bekannt, der auf einer Linse einer Kamera angebrachte Materie detektiert.

Weitere Beispiele sind bekannt aus YINGPING HUANG ET AL: "Stereovision-Based Object Segmentation for Automotive Applications", XP055095478, und aus DE 199 26 559 A1 21. Dezember 2000.

Ferner ist eine automatisierte Erkennung von Objekten in der Umgebung eines Fahrzeuges eine Voraussetzung zum pilotierten und automatischen Fahren eine Fahrzeuges. Von einer Kamera werden Bilddaten oder Datenströme zur Verfügung gestellt, die innerhalb des Fahrzeuges oder in einer externen Auswerteeinheit außerhalb des Fahrzeuges ausgewertet werden. Die Auswertung geschieht möglichst in Echtzeit, damit das Fahrzeug auf die jeweilige Verkehrssituation reagieren kann.

Bei der Analyse der Bildaufnahme werden sogenannte Objektklassen verarbeitet, wobei für unterschiedliche Objekte eigene Objektklassen angelegt werden. Demnach werden beispielsweise die Objektklassen "Kraftfahrzeug", "Nutzfahrzeug", "Zweiräder", "Fußgänger", "Straße" und "sonstige Hindernisse" bei der Bildverarbeitung verwendet. Um Objektklassen in Bilddaten zu erkennen, werden derzeit Verfahren für semantische Segmentierung oder Objekterkennung verwendet.

Bei dem Verfahren der semantischen Segmentierung wird jedem Pixel im Bild eine Objektklasse zugeordnet. Dadurch entsteht ein präzise räumliche Aufteilung zwischen den Objektklassen im Bild. Ein Nachteil der semantischen Segmentierung ist, dass lediglich Bildbereiche, die der Objektklasse entsprechen, erkannt werden, jedoch keine einzelnen Objekte voneinander getrennt unterschieden werden können. Dies ist insbesondere der Fall, wenn Objekte einer Objektklasse in der Bildaufnahme aneinander angrenzen.

Bei dem Verfahren der Objekterkennung werden direkt Objekte in der Bildaufnahme an ihren jeweiligen Positionen erkannt. Ein Nachteil der Objekterkennung ist, dass die Erkennung jeweils für rechteckige Bildbereiche durchgeführt wird. Daher kann keine genaue räumliche Zuordnung erfolgen, insbesondere bei komplexen Konturen und "überhängenden" Objekten bzw. sich überlagernden Objekten in perspektivischer Ansicht.

Ein Verfahren, bei dem sowohl Objekte als auch abgegrenzte Flächen deutlich erkannt werden, d.h. Objekte mit ihren genauen Konturen erkannt werden können, wird als "Instanzsegmentierung" bezeichnet.

Bisher bekannte Verfahren zur Instanzsegmentierung werden oft durch die Kombination verschiedener komplexer und rechenaufwendiger Verfahren gelöst, beispielsweise durch eine Kombination von tiefen neuronalen Netzen zur Objekterkennung und tiefen neuronalen Netzen zur Semantischen Segmentierung. Beispiele hierfür sind die sogenannte "Deep Watershed Transformation", "Instance-aware Semantic Segmentation via Multi-task Network Cascades" und weitere komplizierte und rechenaufwendige Verfahren. Aufgrund der hohen Anforderungen an die Rechenleistung bei diesen Verfahren ist ein Einsatz in Fahrzeugen, z.B. für Fahrerassistenzsysteme und autonomes Fahren schwer möglich, insbesondere da Echtzeitanforderungen zu erfüllen sind und mehrere Kameradatenströme verarbeitet werden müssen. Ferner sind die bisher bekannten Verfahren aufgrund ihrer Komplexität wenig flexibel und auch fehleranfällig.

Es stellt sich demnach die Aufgabe, die bestehenden Nachteile zu überwinden, insbesondere soll ein verbessertes Verfahren zur Instanzsegmentierung bereitgestellt werden.

Diese Aufgabe wird mit einem erfindungsgemäßen Verfahren gemäß Anspruch 1 und mit einem Fahrzeug gemäß Anspruch 10 gelöst. Weitere Ausgestaltungen ergeben sich aus den Unteransprüchen.

Es wird ein erfindungsgemäßes Verfahren zum Auswerten eines optischen Erscheinungsbildes in einer Fahrzeugumgebung vorgeschlagen. Das Verfahren weist ein Bereitstellen einer Bildaufnahme der Fahrzeugumgebung und ein Extrahieren von Merkmalen aus der Bildaufnahme auf. Ferner weist das Verfahren ein Durchführen einer ersten Analyse der Bildaufnahme auf, wobei ein oder mehrere Objekte als Flächen erkannt werden und das Ergebnis der Analyse als erstes Analyseergebnis bereitgestellt wird. Ferner weist das Verfahren ein Durchführen einer zweiten Analyse der Bildaufnahme auf, wobei Kanten eines oder mehrerer Objekte erkannt werden und das Ergebnis der Analyse als zweites Analyseergebnis bereitgestellt wird. Hierbei ist vorgesehen, dass die erste Analyse und die zweite Analyse voneinander unabhängig durchgeführt werden. Ferner weist das Verfahren ein Kombinieren des ersten Analyseergebnisses und des zweiten Analyseergebnisses auf, indem an den Flächen der erkannten Objekte aus dem ersten Analyseergebnis die erkannten Kanten aus dem zweiten Analyseergebnis ausgeschnitten werden.

Die verwendete Bildaufnahme kann mit einer Kamera aufgenommen werden, die in oder an einem Fahrzeug installiert ist. Hierbei kann die Bildaufnahme ein einzelnes Bild einer Bildsequenz sein, die beispielsweise kontinuierlich als Videodaten aufgenommen wird. Auch ist es bei dem vorgeschlagenen Verfahren möglich, mehrere Bildaufnahmen parallel zu analysieren, beispielsweise bei der Erfassung mehrerer zeitgleicher Aufnahmen von mehreren Kameras am oder im Fahrzeug. Dementsprechend werden Analyseeinrichtungen bereitgestellt, die jeweils einer Kamera geordnet sind.

Die bereitgestellte Bildaufnahme liefert Bilddaten, die analysiert werden. Eine Extraktion von Merkmalen der Bildaufnahme umfasst beispielsweise die Aufteilung der Bilddaten in mehrere Faltungsschichten.

Bei dem vorgeschlagenen Verfahren kann die erste Analyse als semantische Segmentierung mit einer ersten Analyseeinrichtung ausgeführt werden. Die zweite Analyse kann als Kantenerkennung mit einer zweiten Analyseeinrichtung durchgeführt werden. Die Kombination der ersten Analyse mit der zweiten Analyse kann als Instanzsegmentierung verstanden werden, bei der Objekte mit ihren Konturen erkannt werden, wobei aneinandergrenzende Objekte (Fahrzeuge, Fußgänger, Fahrradfahrer, Straßenmarkierungen, etc.) voneinander unterschieden werden können. Die Objekte werden in sogenannten Objektklassen definiert und können als Trainingsdaten zur Analyse der Bildaufnahme verwendet werden. Insgesamt werden abgeschlossene Flächen auf der Bildaufnahme erkannt und einzelnen Objekten zugeordnet.

Mit dem vorgeschlagenen Verfahren ist es somit möglich, auch aneinandergrenzende Objekte der gleichen Objektklasse voneinander zu unterscheiden, beispielsweise die Unterscheidung von zwei hintereinanderfahrenden Fahrzeugen, die sich auf der Bildaufnahme in zweidimensionaler Ansicht teilweise überdecken.

In einem bevorzugten Ausführungsbeispiel des Verfahrens kann vorgesehen werden, dass die erste Analyse und die zweite Analyse in einem gemeinsamen tiefen neuronalen Netz durchgeführt werden.

Demnach wird ein Verfahren zum Erzeugen eines einzigen tiefen neuronalen Netzes für Instanzsegmentierung vorgeschlagen. Diese Ausführungsform hat den Vorteil, dass keine unterschiedlichen neuronalen Netze miteinander koordiniert werden müssen, da ein gemeinsames Netz verwendet wird. Hierbei kann das neuronale Netz einen Encoder und einen Decoder aufweisen, wobei der Decoder einen ersten Strang für eine semantische Segmentierung und einen zweiten Strang für eine Kantenerkennung aufweist.

Die Faltungsschichten der Extraktion von Merkmalen aus der Bildanalyse können in einem "Convolutional Neural Network" (CNN) bzw. einem "faltenden neuralen Netzwerk" bereitgestellt werden. Ein Convolutional Neural Network ist ein künstliches neuronales Netz, das zur Muster- und Bilderkennung herangezogen werden kann. Dementsprechend kann der verwendete Encoder und der verwendete Decoder als Convolutional Encoder bzw. als Convolutional Decoder verstanden werden.

In einer weiteren Ausgestaltung des Verfahrens kann vorgesehen werden, dass die erste Analyse auf der Grundlage von ersten Trainingsdaten basiert und die ersten Trainingsdaten Klassen-Klassifikationen aufweisen.

Unter einer Klassifikation bzw. einem Label wird eine Klassenzugehörigkeit für die Trainingsdaten beim maschinellen Lernen verstanden. Demnach wird unter einer Klassen-Klassifikation bzw. einem Klassenlabel hinterlegte Trainingsdaten verstanden, die für die erste Analyse verwendet werden können.

In einem weiteren Ausführungsbeispiel des Verfahrens kann vorgesehen werden, dass die zweite Analyse auf der Grundlage von zweiten Trainingsdaten basiert und die zweiten Trainingsdaten Konturen-Klassifikationen aufweisen.

Unter Konturen-Klassifikationen bzw. Konturenlabel werden Daten verstanden, die als hinterlegte Trainingsdaten für die zweite Analyse verwendet werden können.

Ferner kann mit Vorteil vorgesehen werden, dass die erste Analyseeinrichtung und die zweite Analyseeinrichtung Teil eines Decoders ist, der in zwei Stränge unterteilt ist.

Unter einem Decoder oder Dekodierer ist eine Einrichtung zu verstehen, die Daten verarbeiten kann, um diese zu entschlüsseln bzw. zu dekodieren. Im vorliegenden Verfahren werden Analysedaten der ersten Analyse und der zweiten Analyse mit dem Decoder kombiniert, um ein Gesamtanalyseergebnis zu erhalten. Das Gesamtanalyseergebnis ist hier eine analysierte Bildaufnahme in einer Fahrzeugumgebung, bei der einzelne Objekte voneinander unterschieden werden können, insbesondere, wenn sich Objekte in der Bildaufnahme überschneiden oder aneinandergrenzen.

In einer weiteren Ausführungsform kann vorgesehen werden, dass die erste Analyse und die zweite Analyse zeitlich parallel durchgeführt werden. Dies führt zu besonders schneller Verarbeitung der Bilddaten und zu möglichst kurzen Reaktionszeiten, die insbesondere beim automatisierten Fahren von Fahrzeugen von Vorteil sind.

In einer weitere Ausgestaltung des Verfahrens kann vorgesehen werden, dass mit dem Kombinieren des ersten Analyseergebnisses mit dem zweiten Analyseergebnis eine abgeschlossene Fläche oder eine Mehrzahl von abgeschlossenen Flächen bereitstellt werden, wobei jede abgeschlossene Fläche ein Objekt präsentiert.

Demnach kann vorteilhafterweise jedes einzelne Objekt automatisiert erkannt werden. Die abgeschlossene Fläche wird vorteilhafterweise visuell einem Navigationssystem zur Verfügung gestellt und/oder für eine weitere Bearbeitung verwendet.

In einer weiteren Ausgestaltung des Verfahrens kann vorgesehen werden, dass jeder abgeschlossenen Fläche eine eindeutige Identifikation zugewiesen wird.

Die Zuweisung einer eindeutigen Identifikation, beispielsweise durch eine Farbe oder einen Zahlencode, ermöglicht eine Weiterverarbeitung der Bilddaten, beispielsweise für ein Tracking der Fahrzeugumgebung.

Ferner kann mit Vorteil vorgesehen werden, dass das Verfahren ferner eine Zuweisung eines Fingerabdrucks für jede abgeschlossene Fläche und ein Vergleichen des Fingerabdrucks mit zeitlich früher aufgenommenen Bilddaten aufweist.

Mit der Verwendung eines Fingerabdrucks für ein erkanntes Objekt, das sich als abgeschlossene Fläche darstellt, kann ein Tracking und Matching durchgeführt werden. Der Fingerabdruck verknüpft Eigenschaften eines erkannten Objektes, beispielsweise eines Fahrzeugs, wie Farbe, Geschwindigkeit und Fahrtrichtung miteinander.

Ferner wird die Aufgabe der Erfindung durch ein Fahrzeug gelöst. Das Fahrzeug weist hierfür eine Kamera zum Bereitstellen einer Bildaufnahme der Fahrzeugumgebung, eine erste Analyseeinrichtung und eine zweite Analyseeinrichtung zur Durchführung des erfindungsgemäßen Verfahrens auf. Das erfindungsgemäße Verfahren zum Auswerten eines optischen Erscheinungsbildes in einer Fahrzeugumgebung ist echtzeitfähig und eignet sich daher besonders für ein automatisiertes Fahren von Fahrzeugen. Das erfindungsgemäße Fahrzeug kann für ein pilotiertes oder autonomes Fahren verwendet werden, bei dem einzelne Objekte in der Fahrzeugumgebung schnell und zuverlässig erkannt werden.

Das Prinzip der vorliegenden Erfindung wird nun anhand von beispielhaften Ausführungsformen in den beigefügten Zeichnungen näher erläutert. Es können die gezeigten Ausführungsbeispiele auch beliebig miteinander kombiniert werden. Es zeigen:
- Fig. 1: eine schematische Darstellung eines Ausführungsbeispiels eines erfindungsgemäßen Verfahrens; und
- Fig. 2: einzelne Bildanalysen aus dem erfindungsgemäßen Verfahren nach Fig. 1.

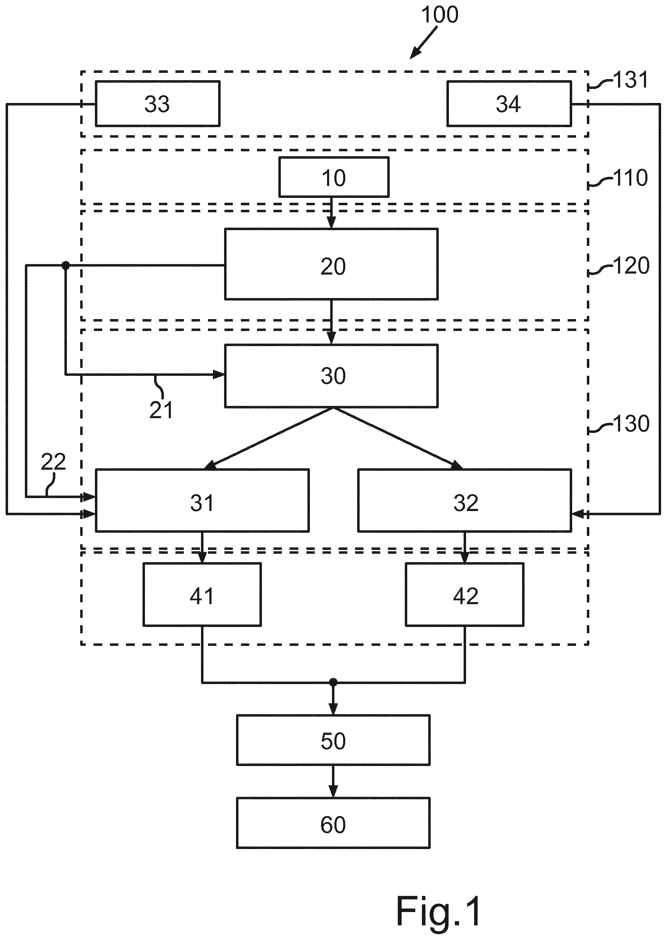

Fig. 1 zeigt eine schematische Darstellung eines Ausführungsbeispiels des erfindungsgemäßen Verfahrens 100. Es wird eine Bildaufnahme 10 der Fahrzeugumgebung als Eingangsbild von einer installierten Kamera 110 in einem oder an einem Fahrzeug bereitgestellt. Die Bildaufnahme 10 wird einem Encoder 120 zugeführt, der das Eingangsbild 10 weiter verarbeitet, so dass ein erstes analysiertes Bild 20 entsteht. Hierfür extrahiert der Decoder Merkmale aus dem Eingangsbild 10. Dies geschieht beispielsweise mit Faltungsschichten. Diese Faltungsschichten können mehrfach nacheinander aufgebaute Faltungsschichten sein. Hierbei können die Faltungsschichten unterschiedliche Funktionen aufweisen, wie eine Faltungsfunktion, ein Pooling und/oder Aktivierungsfunktionen.

Die Bilddaten als ein erstes analysiertes Bild 20 des Encoders 120 werden als Ausgangsdaten 30 einem Decoder 130 zugeführt. Der Decoder 130 hat mehrere Funktionen zur Analyse der zugeführten Bilddaten. Zum einen führt er eine erste Analyse 31 als semantische Segmentierung durch und zusätzlich führt er als zweite Analyse 32 eine Kantenerkennung durch. Zusätzlich können bei der Bildanalyse Klassen-Klassifikationen 33 bzw. Klassenlabel 33 für die semantische Segmentierung und Konturen-Klassifikationen 34 bzw. Konturenlabel 34 für die Kantenerkennung verwendet werden. Die Klassenlabel 33 und die Kantenlabel 34 wurden zuvor aus Trainingsdaten gewonnen und in einem Datenspeicher 131 für Trainingsdaten jeweils hinterlegt.

Es wird ein Eingangsbild 10 mit einer Kamera 110 erfasst und mit einem Encoder 110 werden Merkmale des Eingangsbildes 10 extrahiert. Die Extraktion kann mehrere nacheinander gebaute Faltungsschichten aufweisen. Die Extraktion geschieht beispielsweise durch eine Kombination von Faltung, Pooling, Aktivierungsfunktionen. Danach werden die Faltungsschichten mit einem Decoder 120 bearbeitet und können Entfaltung, Upsampling und/oder Aktivierungsfunktionen einschließen. Fig. 1 zeigt optionale Wirkverbindungen 21, 22, so dass die Faltungsschichten des Encoders 110 optional dem Decoder 120 und/oder der ersten Analyse 31 mit einer semantischen Segmentierung zugeführt werden können.

Die beiden Analysen 31, 32 des Decoders 130 können zeitlich parallel durchgeführt werden, da der Decoder 130 zwei Bearbeitungsstränge aufweist. Das Ergebnis der ersten Analyse 31 stellt der Decoder 130 als erstes Analysebild 41 zur Verfügung. Auch das Ergebnis der zweiten Analyse 32 stellt der Decoder 130 als zweites Analysebild 42 zur Verfügung. Die beiden Analysebilder 41, 42 können dann in einer weiteren Bearbeitungsphase miteinander kombiniert werden, so dass sich ein Ausgangsbild 50 ergibt. Hierbei werden an jedem erkannten Objekt aus dem ersten Analyseergebnis die erkannten Kanten aus dem zweiten Analyseergebnis ausgeschnitten. Das Ergebnis ist dann ein bearbeitetes Bild 50 mit erkannten Objekten und erkannten Kanten, wobei die Kanten einzelne Objekte voneinander trennen. Ferner kann anhand des Ausgangsbildes 50 eine Objektidentifizierung durchgeführt werden, so dass sich ein objektbezogenes Ausgangsbild 60 ergibt. Hierbei werden aus dem Bild 50 zusammengehörige Bildbereiche erkannt und diesen beispielsweise eine eigene Identifikation zugewiesen. Die Identifikation kann beispielsweise dazu verwendet werden, um einzelne Objekte näher zu beobachten bzw. zeitlich weiter zu berücksichtigen. Hierzu kann beispielsweise für jedes einzelne Objekt ein sogenannter Fingerabdruck verwendet werden. Bewegt sich das entsprechende Objekt in Abhängigkeit der Zeit, so kann dieses wiedererkannt werden, indem eine Übereinstimmung des Fingerabdruckes erkannt wird.

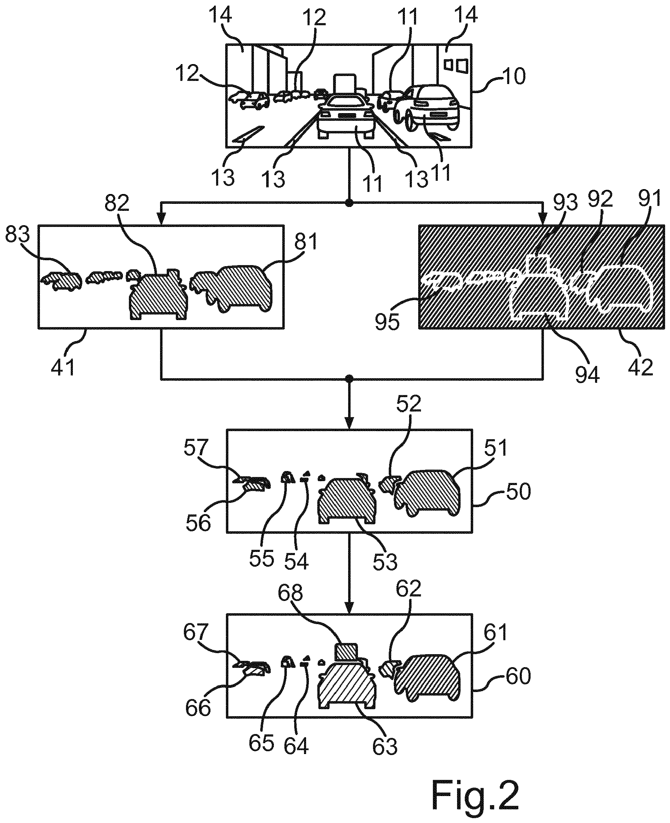

Fig. 2 zeigt ein weiteres Ausführungsbeispiel des erfindungsgemäßen Verfahrens 100 zur weiteren Erläuterung der einzelnen Bildanalysen aus dem Verfahren 100 aus Fig. 1.

Fig. 2 zeigt ein Ausgangsbild 10 als photographische Aufnahme, das von einer Kamera 110 in der Umgebung eines Fahrzeuges aufgenommen wurde. Das Ausgangsbild 10 zeigt ein Vielzahl vorausfahrender Fahrzeuge 11, eine Vielzahl entgegenkommender Fahrzeuge 12, Straßenmarkierungen 13 und mehrere Gebäude 14. Aus dem Ausgangsbild 10 werden zwei Analysebilder 41, 42 gewonnen, indem jeweils anhand des Ausgangbildes 10 eine semantische Segmentierung und eine Kantenerkennung durchgeführt wurden.

Das Ergebnis der semantischen Segmentierung zeigt als Analysebild 41 flächige Objekte, die Fahrzeuge wiedergeben, wobei die einzelnen Fahrzeuge nicht voneinander getrennt dargestellt sind. Entsprechend bilden sich drei voneinander getrennte Flächen 81, 82, 83, wobei jede Fläche mehrere Fahrzeuge repräsentiert.

Das Ergebnis der Kantentrennung zeigt als Analysebild 42 einzelne geschlossene Linien 91, 92, 93, 94, 95, die jeweils ein Fahrzeug repräsentieren, weitere geschlossene Linien wurden in Bild 42 der Fig. 2 nicht weiter bezeichnet.

Durch eine Kombination der analysierten Bilddaten aus Bild 41 und Bild 42 ergibt sich Bild 50, wobei hierzu die Kanten der Kantenerkennung von Bild 42 aus dem Segmentierungsergebnis des Bildes 41 ausgeschnitten werden. In Bild 50 sind somit die zuvor erkannten Fahrzeugflächen 81, 82, 82 jeweils nochmals unterteilt worden, so dass aus den Fahrzeugflächen 81, 82, 82 nun einzelne Fahrzeuge 51-57 hervortreten, die voneinander durch die Kanten getrennt sichtbar sind. (weitere erkannte Fahrzeuge wurden in Fig. 2 nicht markiert). Die nun vereinzelten Fahrzeugflächen werden von klaren Umrissen von benachbarten Fahrzeugflächen getrennt.

In Bild 60 der Fig. 2 werden den jeweilig erkannten Fahrzeugen unterschiedliche Identifikationen zugeordnet, so dass sich für jedes Fahrzeug ein Fingerabdruck ergibt. Ein Fingerabdruck kombiniert erfasste und analysierte Daten eines Fahrzeuges, wie Umriss bzw. Silhouette, Fahrtrichtung, Größe des Fahrzeuges, Art des Fahrzeuges, Geschwindigkeit des Fahrzeuges. In einer zeitlich darauf folgenden Bildaufnahme wird der erstellte Fingerabdruck mit einem neu erstellten Fingerabdruck der zweiten Bildaufnahme verglichen. Sofern eine Übereinstimmung der beiden Fingerabdrücke vorhanden ist, d.h. ein "Matching" vorliegt, wird das zuvor erkannte Objekt der ersten Bildaufnahme als erkanntes Objekt in der zweiten Bildaufnahme identifiziert.

Die dargestellten Ausführungsbeispiele der Fig. 1 und Fig. 2 können unter Verwendung eines neuronalen Netzes mit mindestens zwei Ebenen, d.h. einem tiefen neuronalen Netz realisiert werden. Hierbei werden Trainingsdaten aufbereitet und Klassenlabel und Konturlabel zur Verfügung gestellt.

Statt einer komplexen Konstruktion aus mehreren tiefen neuronalen Netzen oder anderen rechenaufwendigen Verfahren wird ein einziges tiefes neuronales Netz durch das Training mit speziell aufbereiteten Trainingsdaten erzeugt. Die Trainingsdaten setzen sich vorteilhafterweise aus zwei Ebenen zusammen, nämlich einer ersten Ebene mit den Klassenlabeln und einer zweiten Ebene für die Konturlabel. In der zweiten Ebene für die Konturenlabel können beispielsweise nur für die Klassen, von denen später Instanzen erkannt werden sollen (z.B. Verkehrsteilnehmer), Konturen enthalten sein.

Das tiefe neuronale Netz kann für eine semantische Segmentierung, Objekterkennung und Instanzsegmentierung verwendet werden, um deutlich verbesserte Ergebnisse zu erzielen im Vergleich zu konventionellen Verfahren. Unter "tiefen neuronalen Netzen" ist ein mehrschichtiges neuronales Netz zu verstehen, d.h. ein neuronales Netz mit mindestens zwei Schichten.

Die Architektur des für das erfindungsgemäße Verfahren geeigneten tiefen neuronalen Netzes weist einen Decoder auf. Der Decoder kombiniert Merkmale und bildet diese auf den Bildbereich ab. Hierbei ist der Decoder in zwei Stränge aufgeteilt: Einen ersten Strang für die semantische Segmentierung und einen zweiten Strang für die Kantenerkennung.

Eine Kantenerkennung kann zwar prinzipiell mit konventionellen Verfahren (z.B. Sobel, Lablace, Canny) erzielt werden, allerdings würden dann jegliche Kanten im Bild erkannt, insbesondere auch Kanten innerhalb der Instanzen, wodurch die weitere Verarbeitung nicht sinnvoll möglich wäre. Wenn die Kantenerkennung durch das tiefe neuronale Netz gelernt wird, ist es dem fertig trainierten Netz möglich, tatsächlich nur die Konturen der Objekte zu extrahieren.

Das tiefe neuronale Netz wird sowohl mit den Klassenlabeln der semantischen Segmentierung als auch mit den Konturenlabeln der Kantenerkennung trainiert. Dabei wird für beide Stränge zwischen den aktuellen Ergebnissen des Netzes im Training ("Forward Pass") und dem Label ein Fehlerwert (Loss) generiert und zum Training des Netzes zurück propagiert ("Backpropagation").

Die Extraktion von Instanzen geschieht in dem vorgeschlagenen tiefen neuronalen Netz. Zur Segmentierung von Instanzen wird ein Eingangsbild 10 durch das tiefe neuronale Netz verarbeitet. Als Ergebnis gibt das tiefe neuronale Netz eine semantische Segmentierung und die erkannten Kanten aus. Die Kanten werden aus dem Segmentierungsergebnis ausgeschnitten, wodurch die einzelnen Instanzen nicht mehr zusammenhängen. Für dieses Ergebnis wird jeder abgeschlossenen Fläche eine einzigartige ID zugewiesen, anhand welcher die Maske für diesen Bereich (diese Instanz) referenziert werden kann.

Ferner kann ein Fingerprinting, d.h. die Verwendung von Fingerabdrücken, und ein Tracking, die Nachverfolgung von bewegten Objekten, durch die Verwendung eines tiefen neuronalen Netzes bereitgestellt werden. Hierzu können die extrahierten Instanzen effizient über die Zeit "getrackt", d.h. zur tieferen Analyse über die Zeit verfolgt werden, indem für jede Instanz in jedem Bild ein Fingerabdruck (Fingerprint) verwendet wird. Für den Fingerabdruck werden mehrere Merkmale, z.B. Größe, Position, Histogramm, etc. für ein Instanzsegment extrahiert, die mit bestehenden Fingerabdrücken vorangehender Bilder verglichen werden. Kommt es zu einer Übereinstimmung, werden die beiden Fingerabdrücke zu einem neuen Fingerabdruck zusammengelegt, wodurch eine Adaption erfolgt. Alte Fingerabdrücke, die länger keine Übereinstimmung erzielt haben, werden verworfen. Für die per Fingerabdruck-Übereinstimmung gefundenen Korrespondenzen wird angenommen, dass es sich um dasselbe Objekt handelt, welches über die Zeit (=über mehrere Bilder) vom eigenen Fahrzeug erfasst wurde. Für die erkannten Objekte kann dann eine tiefergehende Analyse erfolgen.

Die Verwendung eines tiefen neuronalen Netzes in einem Fahrzeug kann wie folgt ausgestaltet werden:
Ein mögliches System weist eine Backendumgebung auf zum Training des tiefen neuronalen Netzes und ferner Fahrzeuge, auf denen jeweils das tiefe neuronale Netz ausgeführt wird. Die Fahrzeuge sind beispielsweise mit einer oder mehreren Kameras 110 zur Erfassung des Umfelds und spezieller Hardware zur beschleunigten Ausführung des neuronalen Netzes ausgestattet, wie GPU (Grafikprozessor), FPGA (feldprogrammierbare Gatteranordnung) oder spezielle Hardware (TPU (Tensorprozessor), ASIC (anwendungsspezifische integrierte Schaltung), DSP (digitaler Signalprozessor)).

Hierbei wird mit Hilfe spezieller gelabelter Trainingsdaten ein tiefes neuronales Netz darauf trainiert, für ein Eingangsbild 10 eine Semantische Segmentierung 31 und eine Kantenerkennung 32 durchzuführen. Nach Abschluss des Trainings wird das neuronale Netz auf einem Steuergerät eines Fahrzeuges zur Verarbeitung von Fahrzeugkameradaten eingesetzt. Auf dem Steuergerät wird mit Hilfe spezieller Verfahren aus den Ergebnissen des Netzes (Semantische Segmentierung und Kantenerkennung) eine Instanzsegmentierung gewonnen. Mit Hilfe von Fingerprinting werden extrahierte Instanzen, insbesondere Fahrzeuge, über die Zeit verfolgt.

Es ergeben sich insbesondere folgende Vorteile:
Das erfindungsgemäße Verfahren kann als Grundlage für pilotiertes und autonomes Fahren verwendet werden. Hierbei sind die Erkennung und die Verfolgung von Objekten im Fahrzeugumfeld eine Grundlage für pilotiertes und autonomes Fahren.

Durch das beschriebene Verfahren zur Instanzsegmentierung kann eine deutlich höhere Qualität in der Umfeldwahrnehmung im Vergleich zu anderen Verfahren erreicht werden. Durch das erfindungsgemäße Verfahren kann beispielsweise ohne Probleme Querverkehr erkannt und verfolgt werden. Somit erhöht sich die Qualität der Umfeldwahrnehmung.

Die Kantenerkennung und die Extraktion der Instanzen verursachen im Vergleich zur Semantischen Segmentierung kaum Rechenaufwand. Die Semantische Segmentierung durch das beschriebene tiefe neuronale Netz weist eine konstante Laufzeit auf und ist auch in Bezug auf die Laufzeit echtzeitfähig. Demnach wird die Effizienz bei der Bildverarbeitung erhöht.

Das erfindungsgemäße Verfahren kann zur Instanzsegmentierung verwendet werden. Bei entsprechender Implementierung weist das erfindungsgemäße Verfahren eine konstante Laufzeit auf und eignet sich dadurch für Echtzeit-Datenverarbeitung, insbesondere für Echtzeit-Datenverarbeitung im Fahrzeug. Für ein Fingerprinting und ein Tracking ist eine Umsetzung mit konstanter Laufzeit möglich.

Insgesamt wird ein besonders effizientes Verfahren zur pixel-genauen Klassifikation von Kameradaten mit Objekterkennung und Instanzsegmentierung bereitgestellt.

## Patentansprüche

1. Verfahren (100) zum Auswerten eines optischen Erscheinungsbildes in einer Fahrzeugumgebung aufweisend
Bereitstellen einer Bildaufnahme (10) der Fahrzeugumgebung; Extrahieren (20) von Merkmalen aus der Bildaufnahme (10); Durchführen einer ersten Analyse (31) der Bildaufnahme (10), wobei die erste Analyse (31) als semantische Segmentierung ausgeführt wird, wobei ein oder mehrere Objekte einer Objektklasse als Flächen (81, 82, 83) auf der Bildaufnahme (10) erkannt werden, wobei sich die Objekte der Objektklasse in der Bildaufnahme (10) überschneiden oder aneinandergrenzen, und das Ergebnis der Analyse als erstes Analyseergebnis (41) bereitgestellt wird;
Durchführen einer zweiten Analyse (32) der Bildaufnahme (10), wobei Kanten (91-95) eines oder mehrerer Objekte erkannt werden und das Ergebnis der Analyse als zweites Analyseergebnis (42) bereitgestellt wird,
wobei die erste Analyse (31) und die zweite Analyse (32) voneinander unabhängig durchgeführt werden; und
Kombinieren des ersten Analyseergebnisses (41) und des zweiten Analyseergebnisses (42) zu einem Ausgangsbild (50), indem an den Flächen (81, 82, 83) der erkannten Objekte der Objektklasse aus dem ersten Analyseergebnis (41) die erkannten Kanten (91-95) aus dem zweiten Analyseergebnis (41) ausgeschnitten werden, so dass aus den Flächen (81, 82, 83) nun einzelne Objekte (51-57) der Objektklasse hervortreten, die voneinander durch die Kanten getrennt sichtbar sind.

2. Verfahren (100) nach Anspruch 1, wobei die erste Analyse und die zweite Analyse in einem gemeinsamen tiefen neuronalen Netz durchgeführt werden.

3. Verfahren (100) nach Anspruch 1 oder Anspruch 2, wobei die erste Analyse (31) auf der Grundlage von ersten Trainingsdaten basiert und die ersten Trainingsdaten Klassen-Klassifikationen (33) aufweisen.

4. Verfahren (100) nach mindestens einem der Ansprüche 1 bis 3, wobei die zweite Analyse auf der Grundlage von zweiten Trainingsdaten basiert und die zweiten Trainingsdaten Konturen-Klassifikationen (34) aufweisen.

5. Verfahren (100) nach mindestens einem der Ansprüche 1 bis 4, wobei die erste Analyse (31) und die zweite Analyse (32) mit einem Decoder (130) durchgeführt wird, der in zwei Stränge unterteilt ist.

6. Verfahren (100) nach mindestens einem der Ansprüche 1 bis 5, wobei die erste Analyse (31) und die zweite Analyse (32) zeitlich parallel durchgeführt werden.

7. Verfahren (100) nach mindestens einem der Ansprüche 1 bis 6, wobei das Kombinieren des ersten Analyseergebnisses (41) mit dem zweiten Analyseergebnis (42) eine abgeschlossene Fläche oder eine Mehrzahl von abgeschlossenen Flächen (51-57) bereitstellt, wobei jede abgeschlossene Fläche (51-57) ein Objekt der Objektklasse repräsentiert.

8. Verfahren (100) nach Anspruch 7, wobei jeder abgeschlossenen Fläche (51-57) eine eindeutige Identifikation (61-67) zugewiesen wird.

9. Verfahren (100) nach Anspruch 7 oder 8, ferner aufweisend eine Zuweisung eines Fingerabdrucks für jede abgeschlossene Fläche (51-57) und ein Vergleichen des Fingerabdrucks mit zeitlich früher aufgenommenen Bilddaten.

10. Fahrzeug aufweisend eine Kamera (110) zur Bereitstellen einer Bildaufnahme (10) der Fahrzeugumgebung, eine erste Analyseeinrichtung und eine zweite Analyseeinrichtung zur Durchführung des Verfahrens (100) nach einem der Ansprüche 1 bis 9.

## Claims

1. Method (100) for evaluating an optical appearance in the surroundings of a vehicle, having the steps of
providing a captured image (10) of the surroundings of the vehicle;
extracting (20) features from the captured image (10);
carrying out a first analysis (31) of the captured image (10), wherein the first analysis (31) is performed as a semantic segmentation, wherein one or more objects of an object class are detected as areas (81, 82, 83) on the captured image (10), wherein the objects of the object class overlap or adjoin one another in the captured image (10), and the result of the analysis is provided as the first analysis result (41);
carrying out a second analysis (32) of the captured image (10), wherein edges (91-95) of one or more objects are detected and the result of the analysis is provided as the second analysis result (42);
wherein the first analysis (31) and the second analysis (32) are carried out independently of each other; and
combining the first analysis result (41) and the second analysis result (42) into an output image (50) in which, on the areas (81, 82, 83) of the detected objects of the object class from the first analysis result (41), the detected edges (91-95) from the second analysis result (41) are cut out, so that individual objects (51-57) of the object class stand out from the areas (81, 82, 83) and are visible separated from each other by the edges.

2. Method (100) according to claim 1, wherein the first analysis and the second analysis are carried out in a common deep neural network.

3. Method (100) according to claim 1 or claim 2, wherein the first analysis (31) is based on first training data and the first training data have class classifications (33).

4. Method (100) according to at least one of claims 1 to 3, wherein the second analysis is based on second training data and the second training data have contour classifications (34).

5. Method (100) according to at least one of claims 1 to 4, wherein the first analysis (31) and the second analysis (32) is carried out with a decoder (130) which is divided into two strands.

6. Method (100) according to at least one of claims 1 to 5, wherein the first analysis (31) and the second analysis (32) are carried out in parallel in terms of time.

7. Method (100) according to at least one of claims 1 to 6, wherein the combination of the first analysis result (41) with the second analysis result (42) provides one closed area or a plurality of closed areas (51-57), wherein each closed area (51-57) represents an object.

8. Method (100) according to claim 7, wherein each closed area (51-57) is assigned a unique identification (61-67).

9. Method (100) according to claim 7 or 8, further having the steps of assigning a fingerprint for each closed area (51-57) and comparing the fingerprint to previously captured image data.

10. Vehicle having a camera (110) for providing a captured image (10) of the surroundings of the vehicle, a first analysis device and a second analysis device for carrying out the method (100) according to any of claims 1 to 9.

## Revendications

1. Procédé (100) d'exploitation d'une image optique dans un environnement de véhicule présentant
une mise à disposition d'une prise d'image (10) de l'environnement de véhicule ;
une extraction (20) de caractéristiques à partir de la prise d'image (10) ;
une réalisation d'une première analyse (31) de la prise d'image (10), selon laquelle la première analyse (31) est effectuée en tant que segmentation sémantique, selon laquelle un ou plusieurs objets d'une classe d'objets sont reconnus comme étant des surfaces (81, 82, 83) sur la prise d'image (10), selon laquelle les objets de la classe d'objets dans la prise d'image (10) chevauchent ou sont mutuellement attenants, et le résultat de l'analyse est mis à disposition comme premier résultat d'analyse (41) ;
une réalisation d'une seconde analyse (32) de la prise d'image (10), selon laquelle des bords (91-95) d'un ou de plusieurs objets sont reconnus et le résultat de l'analyse est mis à disposition comme second résultat d'analyse (42),
selon lequel la première analyse (31) et la seconde analyse (32) sont réalisées indépendamment l'une de l'autre ; et
une combinaison du premier résultat d'analyse (41) et du second résultat d'analyse (42) en une image de sortie (50), tandis que sur les surfaces (81, 82, 83) des objets reconnus de la classe d'objets provenant du premier résultat d'analyse (41), les bords reconnus (91-95) provenant du second résultat d'analyse (41) sont découpés, de façon qu'à partir des surfaces (81, 82, 83), seulement des objets séparés (51-57) de la classe d'objets ressortent, qui sont visibles séparément les uns des autres par les bords.

2. Procédé (100) selon la revendication 1, selon lequel la première analyse et la seconde analyse sont réalisées dans un réseau neuronal profond commun.

3. Procédé (100) selon la revendication 1 ou la revendication 2, selon lequel la première analyse (31) s'appuie sur la base de premières données d'apprentissage et les premières données d'apprentissage présentent des classifications de classes (33).

4. Procédé (100) selon au moins l'une des revendications 1 à 3, selon lequel la seconde analyse s'appuie sur la base de secondes données d'apprentissage et les secondes données d'apprentissage présentent des classifications de contours (34).

5. Procédé (100) selon au moins l'une des revendications 1 à 4, selon lequel la première analyse (31) et la seconde analyse (32) est réalisée avec un décodeur (130) qui est subdivisé en deux branches.

6. Procédé (100) selon au moins l'une des revendications 1 à 5, selon lequel la première analyse (31) et la seconde analyse (32) sont réalisées parallèlement dans le temps.

7. Procédé (100) selon au moins l'une des revendications 1 à 6, selon lequel la combinaison du premier résultat d'analyse (41) avec le second résultat d'analyse (42) met à disposition une surface terminée ou une pluralité de surfaces terminées (51-57), selon lequel chaque surface terminée (51-57) représente un objet de la classe d'objets.

8. Procédé (100) selon la revendication 7, selon lequel une identification univoque (61-67) est assignée à chaque surface terminée (51-57).

9. Procédé (100) selon la revendication 7 ou 8, présentant en outre une assignation d'une empreinte digitale pour chaque surface terminée (51-57) et une comparaison de l'empreinte digitale avec des données d'image prises précédemment.

10. Véhicule présentant une caméra (110) pour mettre à disposition une prise d'image (10) de l'environnement de véhicule, un premier dispositif d'analyse et un second dispositif d'analyse pour réaliser le procédé (100) selon l'une des revendications 1 à 9.
